Europäisches Patentamt

European Patent Office

Office européen des brevets

(11) Veröffentlichungsnummer: **0 032 523**
**B1**

(12) **EUROPÄISCHE PATENTSCHRIFT**

(45) Veröffentlichungstag der Patentschrift:
20.03.85

(51) Int. Cl.⁴: **C 21 B 9/14,** F 27 D 17/00,
B 01 D 53/04

(21) Anmeldenummer: **80105045.1**

(22) Anmeldetag: **26.08.80**

(54) Verfahren und Vorrichtung zur Rückgewinnung und Wiederverwertung von Wärme aus heissen Gasen, insbesondere aus den Abgasen metallurgischer Prozesse und die Anwendung dieses Verfahrens.

(30) Priorität: **22.12.79 DE 2952216**

(43) Veröffentlichungstag der Anmeldung:
**29.07.81 Patentblatt 81/30**

(45) Bekanntmachung des Hinweises auf die Patenterteilung:
**20.03.85 Patentblatt 85/12**

(84) Benannte Vertragsstaaten:
**BE CH FR GB IT LI**

(56) Entgegenhaltungen:
**DE - B - 2 516 223**
**DE - B - 2 519 899**
**DE - B - 2 707 226**
**DE - C - 266 936**
**GB - A - 1 425 472**
**GB - A - 1 443 197**
**US - A - 3 784 370**
**US - A - 3 884 292**

(73) Patentinhaber: **Mannesmann Demag AG,**
**Wolfgang-Reuter-Platz, D-4100 Duisburg (DE)**

(72) Erfinder: **Ratschat, Günther, Dipl.-Ing., Uhlandstrasse 3,**
**D-4100 Duisburg 46 (DE)**

(74) Vertreter: **Flaig, Siegfried, Dipl.-Ing. (FH), Mannesmann**
**AG Mannesmannufer 2, D-4000 Düsseldorf (DE)**

**Beschreibung**

Die Erfindung betrifft ein Verfahren und eine zu dessen Ausübung vorteilhafte Einrichtung zur Rückgewinnung und Wiederverwertung von Wärme aus heissen Gasen, insbesondere aus den Abgasen metallurgischer Prozesse und aus warmen Gasen, deren Austrittstemperatur unter 800 °C liegt.

Derartige Verfahren bezwecken eine Energieersparnis, d.h. die Ausnutzung bisher ungenutzter Wärme von Prozessgasen zur Vorwärmung der Verbrennungsgase für Verbrennungsprozesse und damit die Einsparung von Brennstoffen. Im metallurgischen Bereich zielen die Bemühungen, Wärmeenergie einzusparen, insbesondere auf Koksgas, Erdgas, Gichtgas (Hochofengas), Heizöl und dergleichen. Ein anderer Zweck derartiger Verfahren ist auf die Abgaswärmeverwertung in hüttenmännischen Prozessen im Sinne der Unterstützung beim Erzeugen hoher Temperaturen für die Metallgewinnung gerichtet. Insbesondere in der Roheisen- und Stahlerzeugung kann die Wirtschaftlichkeit der metallurgischen Prozesse durch höhere Eingangstemperaturen der Prozessgase erhöht werden.

Bei der Erzreduktion sind zur Verbrennung von einer Tonne Koks annähernd 3000 Nm³ Luft erforderlich. Um Brennstoff, also Koks, zu sparen, wird die Luft in Winderhitzern auf maximal 1300 °C erhitzt. Zum Erhitzen der Luft wird das aus dem metallurgischen Ofen entweichende Prozessgas mit einem Zusatz von Koksgas verwendet, das im Winderhitzer verbrannt wird und anschliessend gitterförmige, feuerfeste Steine durchströmt, wodurch der Winderhitzer im Inneren auf maximal 1550 °C aufgeheizt wird. Das aus dem Winderhitzer ausströmende Abgas weist eine Temperatur von etwa 250 °C auf. Das Abgas mit einem beträchtlichen Wärmeinhalt verlässt durch einen Schornstein die Anlage und strömt in die freie Atmosphäre ab. Nach der Aufheizperiode wird der Gasbrenner des Winderhitzers abgeschaltet und kalte Luft, die in Gebläsemaschinen mit höheren Drücken erzeugt wird, durch das heisse Gittermauerwerk des Winderhitzers geblasen. Die heissen Steine geben einen Grossteil ihrer Wärme an die Luft ab, die anschliessend über die Heisswind-Ringleitung und Winddüsen in den Hochofen eingeblasen wird. Zur Verbesserung der Windkapazität arbeiten mindestens zwei derartige Winderhitzer jeweils abwechselnd mit Heiz- und Windzeit.

Der Energieaufwand bei der Erzreduktion ist beträchtlich. So verbraucht für die Erzeugung des Roheisens der Hochofen etwa 66% der Gesamtenergie eines Hüttenwerkes.

Es ist bekannt (Iron and Steel Engineer, August 1979, Seite 14), Wärmeenergie-Ersparnisse durch den Einsatz verbesserter Wärmetauscher zu erzielen. Hierzu ist vorgeschlagen worden, rotierende Platten-/Röhren-Wärmetauscher einzusetzen, deren Wärmeübertragungs-Wirkungsgrad höher als derjenige von Röhrenrekuperatoren angenommen wird. Derartige Wärmetauscher sind auch schon für die Windvorwärmung der Winderhitzer von Hochöfen eingesetzt worden. Die Wärmeersparnis durch den Einsatz angewärmter Luft anstelle von sonst üblicher Kaltluft im Winderhitzer beträgt 25 000 kcal/t Roheisen. Diese Wärmeersparnis führt bei einem Heizwert des Koksofengases von etwa 4000 kcal/Nm³ zu etwa 6 Nm³ Koksgas-Ersparnis pro Tonne Roheisen. Dennoch ist dieses Ergebnis an Wärmeenergieersparnis noch gering und nach neuerer Erkenntnis verbesserungsbedürftig. Einen weiteren Nachteil des Standes der Technik stellen die rotierenden Platten-/Röhren-Wärmetauscher dar, die einem grossen Verschleiss an den rotierenden Teilen ausgesetzt sind.

Es ist ausserdem bekannt (GB-PS 1 425 472), derartige Wärmerohre unter Strassenflächen, Start- und Landebahnen von Flughäfen in der Weise anzuordnen, dass in tieferliegenden Bereichen Wärme aufgenommen und in höherliegenden Bereichen (unterhalb der Strassenoberfläche) Wärme wieder abgegeben wird.

Es ist ferner bekannt (US-PS 3 884 292), derartige Wärmerohre in Abgaskaminen von privaten Wohnheizungen bzw. industriellen Heizungssystemen anzuordnen. Hierbei wird von den Wärmerohren aufgenommene Wärme durch Anströmen der Wärmerohre mit Luft abgeführt und entweder zurück in die Industrieanlage oder das Wohnhaus geführt, wobei die zurückgewonnene Wärme wiederum zum Heizen verwendet wird.

Der Erfindung liegt die Aufgabe zugrunde, bei der Rückgewinnung und Wiederverwertung von Wärme aus heissen Gasen den thermischen Wirkungsgrad zu steigern und insbesondere Wärme aus warmen Gasen zu gewinnen, deren Austrittstemperatur unter 800 °C liegt und ausserdem die hierzu verwendeten Mittel zu verbessern.

Die gestellte Aufgabe wird gemäss Patentanspruch 1 gelöst. Die Vorwärmung der Verbrennungsluft, diein Verbrennungsprozesse eingeleitet wird, ergibt grosse Vorteile für die Prozessführung. Diese Vorteile wirken sich z.B. im Hochofen und Heisswindkupolofen aus und bewirken u.a. erhebliche Brennstoffersparnisse, insbesondere von metallurigschem Koks. Der erfindungsgemässe Vorschlag arbeitet vorteilhafterweise mit einem Wärmeübertragungs-Wirkungsgrad von mehr als 75%.

Es wird weiterhin eine vorteilhafte Einrichtung zur Durchführung des beschriebenen Verfahrens vorgeschlagen. Hierzu ist vorgesehen, dass Wärmerohre zu einem Wärmetauschergehäuse zusammengefasst sind, wobei jeweils ein Längenabschnitt eines Wärmerohres von einer von zwei übereinander angeordneten und gegeneinander wärmeisolierten Kammern des Wärmetauschergehäuses umgeben ist. Besonders günstig ist hierbei die raumsparende Anordnung der Wärmerohre bezüglich des jeweils gekühlten Teils der Wärmerohre.

In weiterer Ausgestaltung der erfindungsgemässen Vorrichtung sind die separaten Kammern des Wärmetauschers mittels Wärmedämmstoffen isoliert. Hierdurch kann der thermodynamische Wirkungsgrad der erfindungsgemässen Einrichtung gesteigert werden.

Ausführungsbeispiele der Erfindung sind in der Zeichnung dargestellt und werden im folgenden näher beschrieben. Anhand der Zeichnung wird ausserdem auch das erfindungsgemässe Verfahren beschrieben. Es zeigen

Fig. 1 einen senkrechten Querschnitt durch eine Hochofen-Winderhitzer-Anlage als erstes Anwendungsbeispiel der Erfindung,

Fig. 2 einen Querschnitt durch Behälter und Wärmetauscher für Molekularsieb-Stoffe, in dem Luft durch Entzug bestimmter Luftbegleiter mit Sauerstoff angereichert wird, als zweites Anwendungsbeispiel der Erfindung.

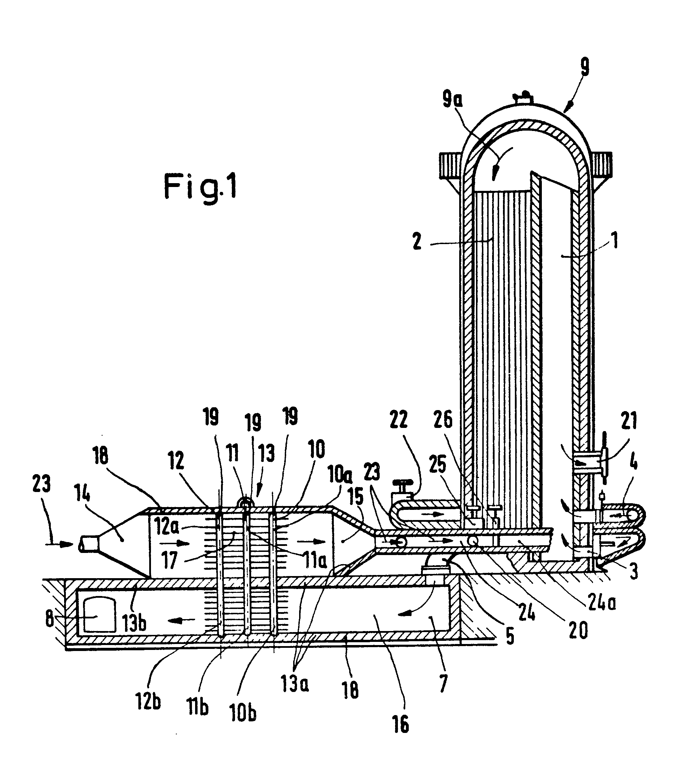

In der dargestellten Hochofen-Winderhitzer-Anlage gemäss Fig. 1 gelangt in der Phase des Aufheizens in den Verbrennungsschacht 1 und damit in das feuerfeste Gitterwerk 2 ein Gasgemisch, bestehend aus Hochofen-Gichtgas und Koksofengas, das durch die Eintrittsöffnung 3 eingeleitet wird und sich mit der vorgewärmten Verbrennungsluft vereinigt, die durch die Eintrittsöffnung 4 einströmt. Die Gase werden dort gezündet und verbrannt. Die so entstandenen heissen Verbrennungsgase steigen im Verbrennungsschacht 1 nach oben, durchströmen die Kuppel 9, werden in der gezeichneten Pfeilrichtung 9a umgelenkt und durchströmen das feuerfeste Gitterwerk 2 nach unten, wobei ein Teil der migeführten Wärme an das Gitterwerk 2 abgegeben wird. Dabei erwärmt sich das Gitterwerk 2 zunehmend bis auf eine zulässige Temperatur von etwa 1550 °C. Die Verbrennungsgase bilden, nachdem sie ihren Wärmeinhalt zu einem grossen Teil übertragen haben, nur noch Abgase, die durch den Abgaskrümmer 5 in den Abgaskanal 7 und von dort durch den Schornstein-Fuchs 8 mit der innewohnenden Wärme ins Freie abströmen und somit verloren wären. Die Abgase weisen in dieser Phase eine Temperatur von ca. 250 °C im Bereich des Abgaskrümmers 5 auf. In den Abgaskanal 7 sind die Wärmerohre 10, 11, 12 in Reihen- bzw. Gitterform-Anordnung eingebaut und bilden mit noch zu beschreibenden Bauteilen den Wärmetauscher 13. Jedes der Wärmerohre ist in sich geschlossen, d.h. an den Rohrenden mit dicht schliessenden Deckeln versehen und weist an der Innenwand eine Kapillarstruktur auf. Die Wärmerohre sind ausserdem mit einer im Temperaturbereich zwischen 100 bis 800 °C oder höheren Temperaturen verdampfungsfähigen Substanz, wie z.B. bei normaler Temperatur flüssigen Metallen oder organischen Stoffen teilweise gefüllt. Diese Stoffe sind besonders wärmeleitfähig, verdampfbar und kondensierbar. Als organische Verdampfungsmittel eignen sich z.B. Frigene und Methan.

Im Prinzip können die Wärmerohre 10, 11, 12 von einem heissen bzw. warmen Luft- bzw. Gasstrom allseitig beaufschlagt werden, wobei die Substanz im Inneren verdampft, so dass die Wärmerohre einen Wärmespeicher bilden. Erfolgt danach die Umschaltung auf einen Kaltluft- bzw. Kaltgasstrom in Gegenrichtung oder in derselben Richtung, so geben die Wärmerohre ihre Wärme an diesen Kaltluft- bzw. Kaltgasstrom ab, dabei rekondensiert die gas- bzw. dampfförmige Substanz im Inneren wieder zu einer Flüssigkeit oder zu einem niedrigen Temperaturen entsprechenden Aggregat-Zustand.

Gezeichnet ist jedoch ein verwandtes Prinzip:

Der Längenabschnitt 10a, 11a, 12a der Wärmerohre befindet sich (Fig. 1) in dem Kaltluftkanal 14, der einen Teil des Wärmetauschergehäuses 13a darstellt. Gleichzeitig bildet der Kaltluftkanal 14 eine separate Kammer 15. In diesem Sinn bildet der Abgaskanal 7, in dem die Längenabschnitte 10b, 11b, 12b der Wärmerohre liegen, ebenfalls eine separate Kammer 16. Die Wärmerohre 10, 11, 12 oder auch eine Gruppe oder mehrere Gruppen oder eine Vielzahl von Wärmerohren sind in der Wandung 13b des Wärmetauschergehäuses 13a befestigt oder auch mtitels stab-, rohr- oder lamellenförmiger Abstützungen 17 miteinander verbunden. Äussere Temperatureinflüsse auf die separaten Kammern 15 und 16 sind zu vermeiden. Zumindest die Wandung 13b ist deshalb mittels Wärmedämmstoffen 18 isoliert.

Im gezeichneten Ausführungsbeispiel liegen die Achsen 19 der Wärmerohre lotrecht und parallel. Eine andere Lage der Wärmerohre unter Beibehaltung des Querstrom-Prinzips Wärmerohrachse/Kaltgas- bzw. Brenngasstrom ist möglich. Ferner bilden die Wärmerohre 10, 11 und 12 zusammen mit den Abstützungen 17 eine einschiebbare Baueinheit, die leicht mit einem Kran ausgewechselt werden kann, falls eine Reinigung von Staubpartikeln stattfinden soll, die sich an den Lamellen, Abstützungen, Rohren und dergleichen festgesetzt haben.

In der Aufheizperiode des Winderhitzers werden wie beschrieben die Wärmerohre 10, 11, 12 mit der Restwärme des Verbrennungsgases ebenfalls aufgeheizt. In der anschliessenden Windperiode des Winderhitzers strömt kalt eingeblasene Luft durch die Öffnung 20 des Winderhitzers, erhitzt sich an dem heissen Gitterwerk 2 bis auf eine Temperatur von etwa 1300 °C und strömt dann durch die Austrittsöffnung 21 in den (nicht dargestellten) Hochofen. Anstelle dieser Kaltluftzufuhr durch die Öffnung 20 kann nunmehr bei geöffnetem Ventil 22 vorgewärmte Kaltluft in Richtung der Pfeile 23 durch die Rohrleitung 24 in die Öffnung 20 einströmen, wodurch die Temperatursteigerung des aus der Austrittsöffnung 21 ausströmenden Windes bis auf die erwähnte Temperatur von 1550 °C erfolgen kann, jedoch unter entsprechender Verminderung an Brenngasmenge.

Eine weitere Menge Brenngas kann bei der Aufheizung des Gitterwerkes 2 eingespart werden, indem anstelle von Kaltluft in Richtung der Pfeile 23 bei geschlossenem Ventil 25 und geöffneten Ventilen 22 und 26 Brenngas vorgewärmt und durch die Rohrleitung 24a in die Eintrittsöffnung 3 eingespeist wird.

Es ist hierbei nicht erforderlich, dass vorher die Wärmespeicherung in den Wärmerohren 10, 11, 12 auf der Basis der heissen Abgase, die durch den Abgaskanal 7 strömen, erfolgt ist. Die Wärme braucht daher nicht unbedingt aus dem gezeichneten Winderhitzer bezogen zu werden, sondern kann auch aus einem zweiten Winderhitzer oder anderen Bereichen des Hüttenwerks abgezweigt worden sein.

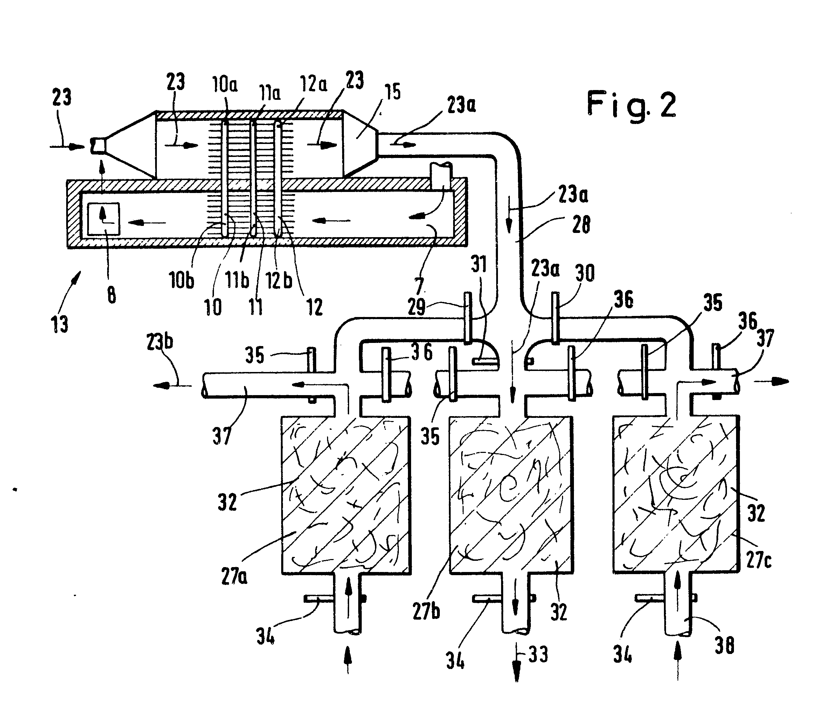

In der in Figur 2 dargestellten Molekularsieb-Stoff-Anlage ist den Behältern 27a, 27b, 27c für die Molekularsieb-Stoffe ebenfalls ein Wärmetauscher 13 zugeordnet. Die Molekularsieb-Stoffe dienen der Anreicherung der zugeführten Kaltluft mit Sauerstoff sowie zur Entfeuchtung der Kaltluft. Mit Sauerstoff angereicherte Luft, die zudem vorgewärmt und entfeuchtet ist, senkt ebenfalls den Energiebedarf im Winderhitzer und/oder im Hochofen. Andererseits findet in den Molekularsieb-Behältern 27a, 27b, 27c aufgrund zugeführter vorgewärmter Luft bzw. Gase eine intensivere Regeneration der mit Stickstoff und Feuchtigkeit gesättigten Molekularsieb-Stoffe statt.

Wie im vorstehend beschriebenen Ausführungsbeispiel strömt ein Heiss- oder Warmgas durch den Abgaskanal 7, das z.B. von einer Hochofen-Winderhitzer-Anlage entnommen worden sein kann, gibt Wärme an die Wärmerohre 10, 11, 12 in den Längenabschnitten 10b, 11b, 12b ab und verlässt mit einer Temperatur den Schornsteinfuchs 8, die gerade noch die verlangte Abgas-Austrittsgeschwindigkeit im Schornstein erzeugt. Von einem weiter nicht dargestellten Gebläse gelangt kalte Frischluft in Richtung der Pfeile 23 in die Kammer 15, erwärmt sich an den Wärmerohren in den Längenabschnitten 10a, 11a, 12a und strömt als Warmluft 23a über die Zuführungsleitung 28 zu den Molekularsieb-Behältern 27a, 27b, 27c.

Bei geschlossenen Ventilen 29 und 30 und geöffnetem Ventil 31 bewirkt die Warmluft 23a im Behälter 27b eine Regeneration des Molekularsieb-Stoffes 32, wobei desorbierte Abgase 33 (Stickstoff, Kohlendioxid, Feuchtigkeit) bei geöffnetem Ventil 34 ins Freie strömen. Der Molekularsieb-Stoff 32 des Behälters 27b ist damit wieder bereit, durch Adsorbtion von Stickstoff, Kohlendioxid und Wasserdampf eine Sauerstoffanreicherung von Luft herbeizuführen.

Mit Sauerstoff angereicherte Luft kann dann in anderweitige metallurgische Prozesse eingeführt werden.

Der vorstehend für den Behälter 27b beschriebene Regenerationsvorgang wird in Invervallen auch in den Behältern 27a und 27c durchgeführt. Nach Abschluss des jeweiligen Verfahrensabschnittes wird jeweils Warmluft 23a oder Kaltluft mittels eines nicht gezeichneten Gebläses im Gegenstrom bei geöffnetem Ventil 34 durch die zeolithischen Molekularsieb-Stoffe 32 geleitet, wodurch die Sauerstoffanreicherung bewirkt wird. Die auf diese Art gewonnene, mit Sauerstoff angereicherte Luft 23b strömt bei geöffnetem Ventil 35 und geschlossenem Ventil 36 durch die Rohrleitung 37 z.B. zum Hochofen in die Windleitung und durch die Düsen in den Hochofen.

Während der Verfahrensabschnitte «Regeneration» im Behälter 27b und «Sauerstoffanreicherung» (Adsorbtionsperiode) im Behälter 27a erfolgt ein Abkühlen des Molekularsieb-Stoffes 32 im Behälter 27c. Hierbei strömt kalte Frischluft vom Gebläse bei geöffnetem Ventil 34 durch die Rohrleitung 38 und durch den Behälter 27c. Bei über 100°C liegender Ablufttemperatur strömen die Gase durch die Rohrleitung 37, wobei das Ventil 36 geöffnet und das Ventil 35 geschlossen ist, als Warmgas in den Wärmetauscher 13. In dieser Periode kühlen die zeolithischen Molekularsieb-Stoffe 32 des Behälters 27c ab. Bei entsprechend niedriger Temperatur in einem Bereich, in dem keine Wärme mehr entzogen werden kann, wird die Abluft ins Freie geleitet.

Gemäss dem vorstehend beschriebenen zweiten Ausführungsbeispiel der Erfindung dient der Wärmetauscher 13 wechselweise der Beeinflussung der Molekularsieb-Stoffe 32 und dem Reduktionsprozess im Hochofen sowie weiterer metallurgischer Prozesse, wie z.B. Stahlerzeugungsverfahren, Vorwärmung von Reaktionsgasen für das Stahlerzeugungsverfahren in boden- bzw. düsenbeblasenen Stahlwerkskonvertern.

**Patentansprüche**

1. Anwendung des Verfahrens der Rückgewinnung von Abwärme durch eine Vielzahl von Wärmerohren in einem Abluftkanal auf die Wiederverwertung von Abgasen aus metallurgischen Prozessen in der Zuluft für Winderhitzer während der Aufheiz- oder der Windperiode und/oder für die Regeneration von Molekularsiebbetten, wobei die in Reihen- bzw. Gitterform angeordneten Wärmerohre (10, 11, 12) untereinander mittels stab- oder lamellenförmiger Abstützungen (17) verbunden sind.

2. Vorrichtung zur Durchführung des Verfahrens nach Anspruch 1, dadurch gekennzeichnet, dass Wärmerohre (10, 11, 12) zu einem Wärmetauschergehäuse (13a) zusammengefasst sind, wobei jeweils ein Längenabschnitt (10a, 11a, 12a bzw. 10b, 11b, 12b) eines Wärmerohres (10, 11, 12) von einer von zwei übereinander angeordneten und gegeneinander wärmeisolierten Kammern (15, 16) des Wärmetauschergehäuses (13a) umgeben ist.

3. Vorrichtung nach Anspruch 2, dadurch gekennzeichnet, dass die separaten Kammern (15, 16) des Wärmetauschers (13) mittels Wärmedämmstoffen (18) isoliert sind.

**Claims**

1. Application of waste heat reclamation process, using a multiplicity of heat tubes in an exhaust air duct, to the reclamation of waste gases from metallurgical processes in the inlet air for hot blast stoves during the heating up or blast period and/or for the regeneration of molecular screen beds, the heat tubes (10, 11, 12) in rows or grids being interconnected by bar type or lamellar type supports (17).

2. Device for carrying out the process described in claim 1, characterized by the heat tubes (10, 11, 12) being made up to form a heat exchanger housing (13a) with always one longitudinal section (10a, 11a, 12a and 10b, 11b, 12b respectively) of a heat tube (10, 11, 12) being enveloped by one of two chambers (15, 16) of the heat exchanger casing (13a) arranged above each other and heat-in-sulated vis-à-vis each other.

3. Device according to claim 2, characterized by the separate chambers (15, 16) of the heat exchanger (13) being insulated by means of heat-insulating materials (18).

## Revendications

1. Utilisation du procédé de récupération de la chaleur évacuée au moyen d'un certain nombre de tubes échangeurs de chaleur dans une gaîne d'évacuation d'air pour la réutilisation de gaz perdus de processus métallurgiques dans l'air d'alimentation de cowpers pendant la phase de réchauffage ou de circulation de vent chaud et feu pour la régénération de lits de tamis moléculaires, les tubes échangeurs de chaleur (10, 11, 12) disposés en ligne ou en ruchage étant reliés entre eux par des appuis en forme de tiges ou de lamelles (17).

2. Dispositif pour la mise en application du procédé suivant revendication 1, caractérisé en ce que des tubes échangeurs de chaleur (10, 11, 12) sont regroupés en une chambre d'échange thermique (13a), chaque tronçon (10a, 11a, 12a et 10b, 11b, 12b) de tube (10, 11, 12) se situant dans l'un des deux compartiments (15, 16) superposés et calorifugés l'un par rapport à l'autre de la chambre d'échange thermique (13a).

3. Dispositif suivant revendication 2, caractérisé en ce que les compartiments séparés (15, 16) de l'échangeur de chaleur (13) sont calorifugés (18).

Fig.1

Fig. 2

0 032 523